(19) Europäisches Patentamt
European Patent Office
Office européen des brevets

(11) **EP 3 289 407 B1**

(12) **EUROPEAN PATENT SPECIFICATION**

(45) Date of publication and mention
of the grant of the patent:
**26.06.2019 Bulletin 2019/26**

(51) Int Cl.:
*H04B 10/50* [(2013.01)]     *H04B 10/2575* [(2013.01)]
*H04B 10/272* [(2013.01)]    *G02F 1/01* [(2006.01)]

(21) Application number: **16795788.5**

(22) Date of filing: **28.04.2016**

(86) International application number:
**PCT/CN2016/080513**

(87) International publication number:
**WO 2016/184301 (24.11.2016 Gazette 2016/47)**

(54) **POLARIZATION INDEPENDENT REFLECTIVE MODULATOR**

POLARISATIONSUNABHÄNGIGER, REFLEKTIERENDER MODULATOR

MODULATEUR DE RÉFLEXION INDÉPENDANT DE LA POLARISATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **15.05.2015 US 201562162161 P
22.04.2016 US 201615136396**

(43) Date of publication of application:
**07.03.2018 Bulletin 2018/10**

(73) Proprietor: **Huawei Technologies Co., Ltd.
Longgang District
Shenzhen, Guangdong 518129 (CN)**

(72) Inventors:
• **WEN, Yangjing
Cupertino, CA 95014 (US)**
• **ZHU, Fei
Coral Cables, FL 33156 (US)**
• **BAI, Yusheng
Los Altos Hills, CA 94024 (US)**

(74) Representative: **Epping - Hermann - Fischer
Patentanwaltsgesellschaft mbH
Schloßschmidstraße 5
80639 München (DE)**

(56) References cited:
**WO-A1-94/25883      WO-A2-01/35539**

CN-A- 1 900 768      CN-A- 102 820 945
CN-A- 103 424 894    CN-A- 104 049 375
CN-A- 104 122 674    US-B2- 8 988 753

• YAO X S: "Polarization insensitive antenna remoting link with frequency conversion gain", IEEE PHOTONICS TECHNOLOGY LETTERS, IEEE SERVICE CENTER, PISCATAWAY, NJ, US, vol. 12, no. 10, 1 October 2000 (2000-10-01), pages 1382-1384, XP011432058, ISSN: 1041-1135, DOI: 10.1109/68.883837
• ESMAN R D ET AL: "Polarization-independent Fiber-optic Microwave Modulator", OPTICAL MICROWAVE INTERACTIONS/VISIBLE SEMICONDUCTOR LASERS/IMPACT OF FIBER NONLINEARITIES ON LIGHTWAVE SYSTEMS/HYBRID OPTOELECTRONIC INTEGR ATION AND PACKAGING/GIGABIT NETWORKS., LEOS 1993 SUMMER TOPICAL MEETIN G DIGEST ON SANTA BARBARA, CA, USA 19-, 19 July 1993 (1993-07-19), pages 31-32, XP032370751, DOI: 10.1109/LEOSST.1993.696795 ISBN: 978-0-7803-1284-5
• CHARBONNIER B ET AL: "Silicon photonics for next generation FDM/FDMA PON", JOURNAL OF OPTICAL COMMUNICATIONS AND NETWORKING, INSTITUTE OF ELECTRICAL AND ELECTRONICS ENGINEERS, US, vol. 4, no. 9, 1 September 2012 (2012-09-01), pages A29-A37, XP011463171, ISSN: 1943-0620, DOI: 10.1364/JOCN.4.000A29

**Description**

**BACKGROUND**

In optical access networks, carrier distribution has been considered as a promising scheme in realizing a low-cost light source for uplink signal. In carrier distribution schemes, an optical carrier signal is delivered from an optical source positioning in a central office to a remote device. The remote device then modulates uplink data onto the received optical carrier signal, and sends the modulated carrier signal back to the central office. However, current modulators employed in such systems are either temperature sensitive or only operate at a relatively low speed to avoid overheating. As a result, carrier distribution is not feasible if the remote device is uncooled and is therefore exposed to temperatures in excess of 85 degrees Celsius (°C) and/or if the application requires high speed operation. In such cases, conventional modulators are unable to properly modulate a usable uplink signal.

X. S. Yao, "Polarization insensitive antenna remoting link with frequency conversion gain", IEEE Photon. Technol. Lett., vol. 12, pp. 1382-1384, 2000, demonstrates a novel photonic link that simultaneously achieves frequency conversion, optical amplification, polarization sensitivity elimination, and fiber dispersion effect minimization. The link also uses low loss and less expensive phase modulators to replace intensity modulators and thus eliminates modulator bias problems.

R.D. Esman ; M.J. Marrone, "Polarization-independent Fiber-optic Microwave Modulator", LEOS 1993 Summer Topical Meeting Digest on Optical Microwave Interactions/Visible Semiconductor Lasers/Impact of Fiber Nonlinearities on Lightwave Systems/Hybrid Optoelectronic Integration and Packaging, disclose a passive scheme to address low-frequency modulators over conventional fiber links, termed orthoconjugating loop mirror (OCLM), which uses a polarization beam splitters (PBS) with the fibers from the output port connected in a loop that contains a 90° Faraday rotator. They expands the technique to include wideband dual-feed traveling wave devices.

WO 94/25883 A1 discloses an apparatus and method for converting a signal of arbitrary polarization to one of preselected polarization, e.g. for use by a sensor, transducer, etc. A signal splitter divides the input signal into its orthogonal linearly polarized components, and launches the components from a pair of output ports. The signals counterpropagate to the opposite port, and, while couterpropagating, are rotated into the same linear polarization state. In one embodiment, the rotation is done by a pair of complementary 45 degree Faraday rotators; in another, by one 90 degree rotator. In the former, the signal is recombined at the splitter in the initial state of polarization that in which the signal initially entered the splitter; in the latter, the recombined signal is of orthoconjugate polarization to the input signal.

WO 01/35539 A2 discloses Systems and techniques for transmitting and processing an electrical signal through an opto-electronic system with an optical Brillouin amplifier (see Abstract). In one embodiment, a photonic RF link may be configured to achieve a number of signal processing operations in the optical domain, including frequency up or down conversion and signal amplification. The processing operations in the optical domain may be insensitive to the polarization state of light and substantially free of the fiber dispersion effect after transmission through a fiber link. Such a photonic RF link may also use low loss and less expensive optical phase modulators to avoid modulator bias problems in some optical intensity modulators.

B. Charbonnier, Sylvie Menezo, P. O'Brien, Aurelien Lebreton, J. M. Fedeli, and B. Ben Bakir, "Silicon Photonics for Next Generation FDM/FDMA PON," J. Opt. Commun. Netw. 4, A29-A37, 2012, show that frequency division multiplexing/frequency division multi-access passive optical networks provide a possible solution in terms of performance, manufacturability and cost to the specification of the second next generation passive optical access systems (NG-PON2). The upstream capacity of a particular implementation is experimentally evaluated, and the implementation of the required optical network unit in silicon photonics is analyzed, as this complementary-metal-oxide-semiconductor-compatible technology is well suited for mass market applications.

**SUMMARY**

In one embodiment, the disclosure includes an apparatus as defined in claim 1. These and other features will be more clearly understood from the following detailed description taken in conjunction with the accompanying drawings and claims.

**BRIEF DESCRIPTION OF THE DRAWINGS**

For a more complete understanding of this disclosure, reference is now made to the following brief description, taken in connection with the accompanying drawings and detailed description, wherein like reference numerals represent like parts.

FIG. 1 is a schematic diagram of an embodiment of a polarization independent reflective modulator (PIRM).

FIG. 2 is a schematic diagram of an embodiment of a cloud radio access network (CRAN) configured to employ a PIRM.

FIG. 3 is a schematic diagram of an embodiment of a CRAN configured to employ wavelength division multiplexing via a plurality of PIRMs.

FIG. 4 is a schematic diagram of an embodiment of a datacenter network configured to employ PIRMs.

FIG. 5 is a schematic diagram of an embodiment of a silicon waveguide based PIRM.

FIG. 6A is a top view of an embodiment of an external polarization beam splitter coupler (EPSBC) based PIRM.

FIG. 6B is a cross sectional view of the embodiment of the EPSBC based PIRM.

FIG. 7 is a schematic diagram of an embodiment of a grating coupler based PIRM.

FIG. 8 is a schematic diagram of an embodiment of a baseband unit (BBU) for use in a CRAN employing PIRMs.

FIG. 9 is a schematic diagram of another embodiment of a BBU for use in a CRAN employing PIRMs.

FIG. 10 is a schematic diagram of an embodiment of a Network Element (NE) configured to operate in a network employing PIRMs.

FIG. 11 is a flowchart of an embodiment of a method of PIRM based modulation.

FIG. 12 is a graph of power penalty versus modulator location deviation tolerance for an embodiment of a PIRM.

## DETAILED DESCRIPTION

It should be understood at the outset that although an illustrative implementation of one or more embodiments are provided below, the disclosed systems and/or methods may be implemented using any number of techniques, whether currently known or in existence. The disclosure should in no way be limited to the illustrative implementations, drawings, and techniques illustrated below, including the exemplary designs and implementations illustrated and described herein, but may be modified within the scope of the appended claims along with their full scope of equivalents.

In cloud radio access networks (CRANs), traffic rate requirements may necessitate the use of fiber connections between remote radio units (RRUs) and baseband units (BBUs). In such a network, an optical transponder may be placed at a tower which is connected to the radio unit via common public radio interface (CPRI). In this kind of environment, the transponder may be subjected to high temperatures in excess of 85° C. At such a high temperature, uncooled lasers may not operate properly and/or may not provide sufficient power budget, particularly at high-speed modulation rates, for example, greater than or equal to 25 gigabits per second (Gbps). Cooling lasers using thermoelectric cooling (TEC) significantly increase power consumption. It is thus desirable to eliminate the laser at the RRU site, to deliver the optical carrier from the BBU, and to modulate data at the RRU via an optical modulator. However, optical modulators (such as Mach-Zehnder modulators) that can be operated in uncooled conditions are dependent on the polarization orientation of the incoming optical carrier, which varies randomly after fiber transmission and is difficult to track. Disclosed herein are embodiments of a polarization independent reflective modulator (PIRM). The PIRM is operable in high temperature environments and eliminates the polarization dependence of an optical carrier coming from an optical medium such as a fiber. The PIRM employs a polarization beam splitter/combiner to split the incoming optical carrier into two perpendicular polarization components, sometimes referred to herein as transverse electric (TE) and transverse magnetic (TM) components, and forwards each of the polarization components along a different light path. One of the polarization components is then rotated to be parallel to the other component. For example, the TM component is rotated, resulting in a second TE component. After rotation, both polarization components share the same polarization, which allows a polarization sensitive modulator to operate on both components. The two polarization components are input into an optical modulator from opposite ends for substantially simultaneous modulation. The modulated components then swap light paths and return to the polarization beam splitter/combiner for combination into a complete modulated signal. Multiple PIRMs may be coupled to a multiplexer to allow each PIRM to operate on a different wavelength ($\lambda$), allowing the PIRMs to support wavelength division multiplexing. In a CRAN network, the PIRM(s) are positioned in one or more RRUs, each corresponding to a BBU comprising the optical source (e.g. laser). In a datacenter network, the PIRMs may be positioned in server rack, for example in the servers or in a top of rack (ToR) element. PIRMs may also be positioned in end of row (EOR) switches, which allows a single optical source/laser to provide carriers for a plurality of sever rows.

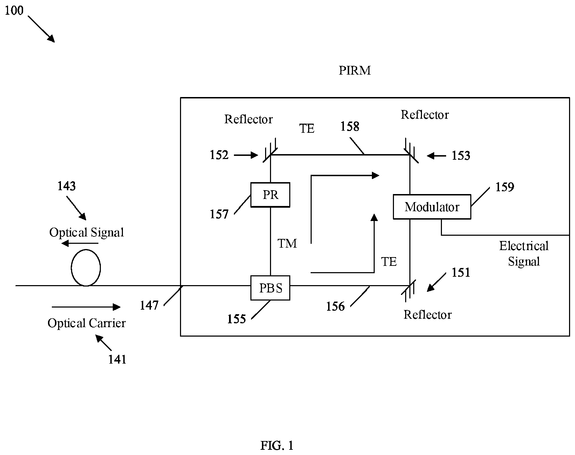

FIG. 1 is a schematic diagram of an embodiment of a polarization independent reflective modulator (PIRM) 100. The PIRM 100 comprises a polarization beam splitter (PBS) 155 coupled to a modulator 159 via a light path 156 and a light path 158, sometimes generally referred to herein as a first/second light path. Reflectors 151, 152, and 153 are positioned along the light paths 156 and 158 to control the direction of light traversing the light paths 156 and 158. The PIRM 100 further comprises an optical input 147 for receiving an optical carrier 141 and transmitting an uplink signal 143 over an optical medium, such as an optical fiber, etc.

The PBS 155 may be any device configured to split an optical carrier into two polarized light beams and output the polarized light beams along light paths 158 (in a clockwise direction) and 156 (in a counter-clockwise (CCW) direction), respectively. Specific examples of PBS 155 are discussed further in various embodiments below. The PBS 155 receives an optical carrier 141 via an optical input 147, which may be a port, an optical waveguide, etc. The optical carrier 141 may be received from a remote apparatus comprising a continuous wavelength laser or similar optical source. The optical carrier 141 may be linearly polarized upon leaving the remote device, but may become elliptically polarized during transmission to the PIRM. For example, the optical carrier may comprise a single optical component, such as a TE polarization, but portions of the optical carrier may rotate into a TM polarization when traversing an optical fiber. The PBS 155 sends the light beam of the received optical carrier 141 containing the TE polarization portion via light path 156. The PBS 155 sends the light beam of the received optical carrier 141 containing the TM polarization portion via light path 158. When light beams leave the PBS 155, light in clockwise direction contains whatever portion of the optical carrier that comprises a polarization that is perpendicular to light beam in CCW direction.

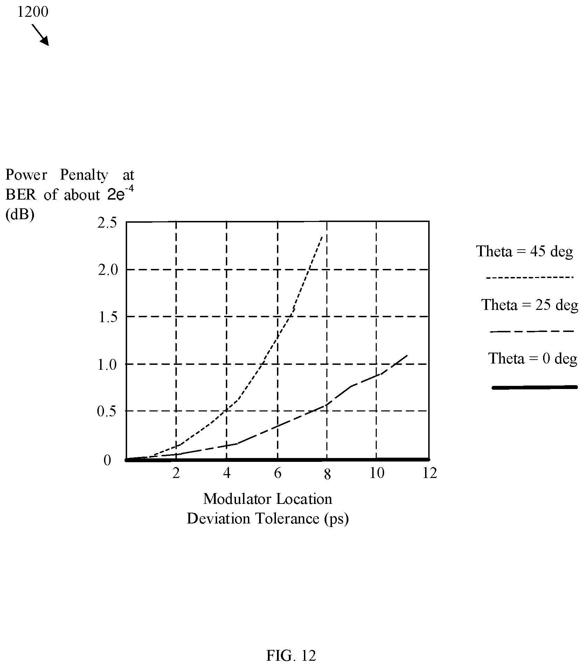

The light paths 156 and 158 may comprise any medium with a refractive index suitable for communicating an optical signal, for example an optical waveguide, glass, air, etc. A polarization rotator (PR) 157 is positioned along light path 158. PR 157 may be any device configured to rotate the polarization of a polarized light beam by a specified angle, such as a Faraday rotator or a mode converter. Specifically, PR 157 rotates the polarization of light beam in the clockwise direction so that the light beam becomes polarized in parallel with the light beam in CCW direction (e.g. a 90 degree rotation). In other words, PR 157 converts the TM polarization of light beam in clockwise direction into a TE polarization so that the light in both directions comprise the same polarization. In the example embodiment shown in FIG. 1, the PIRM 100 comprises reflectors 151, 152, and 153. The reflectors 151-153 may be any materials/devices with refractive index sufficient to alter the direction of light beam in clockwise and CCW directions along the light paths 156 and 158, as shown. Modulator 159 may be any device capable of modulating an electrical signal onto an optical carrier. Specifically, modulator 159 is a high speed lumped modulator where the modulator active length may be less than 2 millimeters (mm). Modulator 159 may be implemented as any silicon waveguide based modulator, a single lumped modulator, a Mach-Zehnder modulator (MZM), an Inphase Quadrature (IQ) modulator, an electro-absorption modulator, a micro-ring resonator based modulator, etc. Modulator 159 comprises a proximate end and a distal end coupled to light path 156 and light path 158, respectively. Modulator 159 is configured to receive the light beam in CCW direction at the proximate end and receive the light beam in clockwise direction at the distal end. As light beams in both directions pass through modulator 159, the modulator 159 substantially simultaneously modulates the electrical signal onto both light beams. Modulator 159 may be selected to be temperature insensitive and polarization sensitive. However, because the TM component has been rotated into a TE polarization by PR 157, both light beams share the same polarization. Accordingly, modulator 159 can modulate both light beams despite the light beams being received from opposite directions. To ensure the same portion of optical carrier 141 is substantially simultaneously modulated by modulator 159 (e.g. no signal skews), light paths 156 and 158 should be approximately the same length, placing the modulator 159 in the center of the optical circuit. Modulator 159 position may vary slightly (e.g. 0.5 picoseconds (ps), 1 ps, etc. difference between light path travel times) without significantly impacting modulation, as shown in FIG. 12 below.

Modulated light beams exit the modulator 159 from opposite ends, such that the modulated light beam in the CCW direction leaves the distal end and the modulated light beam in clockwise direction leaves the proximate end. The modulated light beam in the clockwise direction continues clockwise around the optical circuit via light path 156 and the modulated light beam in the CCW direction continues counter-clockwise around the optical circuit via light path 158. The modulated light beams in both directions are both received back at PBS 155 and combined into a combined modulated optical signal 143, which is then transmitted upstream across the same fiber transporting the optical carrier 141.

By employing the optical circuit of PIRM 100, the dependence of polarization on incoming optical carrier is eliminated. Accordingly, PIRM 100 allows the laser/optical source to be moved to a remote apparatus while allowing modulation to occur in a high temperature environment by a temperature insensitive modulator. Further, it should be noted that first component, second component, TM, and TE are employed herein as labels for purposes of discussion, but may be alternated in some embodiments without affecting the operation of PIRM 100. Further, PR 157 may instead be positioned in light path 156 with the PBS 155 TM polarization output connected to path 156, but with no change in the combined modulated signal 143 output from the PIRM.

It should be noted that the modulator 159 can be designed to be located at the middle of an optical path comprising both light path 156 and light path 158. Practical fabrication may have some tolerance. Assuming that the incoming optical carrier 141 has a rotation angle $\theta$ relative to the TE polarization of PBS 155, the output optical field of the PIRM can be expressed as:

$$\vec{E}_{out}(t) = \hat{e}_{TE} E_{in} f\left(t - \frac{T}{2} - \delta\right) \cos\theta + \hat{e}_{TM} E_{in} f\left(t - \frac{T}{2} + \delta\right) \sin\theta \tag{1}$$

where $E_{out}$ is the PIRM 100 output optical field as a function of time (t), $E_{in}$ is the amplitude of the PIRM 100 input optical field, f(t) is the modulation waveform function of modulated data over time, T is the delay of the PIRM 100 optical path (e.g. light path 156 plus light path 158), $\delta$ is the modulator 159 location deviation away from the optical path center, $\hat{e}_{TE}$

and $\hat{e}_{TM}$ are the unit vectors of TE and TM polarizations, respectively, and $\hat{e}_{TE} \cdot \hat{e}_{TE}$ = 1, $\hat{e}_{TM} \cdot \hat{e}_{TM}$ = 1, $\hat{e}_{TE} \cdot \hat{e}_{TM}$ = 0. The total output power is expressed as:

$$P_{out}(t) = \left|\vec{E}_{out}(t)\right|^2 = \left|E_{in}\right|^2 f^2\left(t - \frac{T}{2} - \delta\right)\cos^2\theta + \left|E_{in}\right|^2 f^2\left(t - \frac{T}{2} + \delta\right)\sin^2\theta \qquad (2)$$

where $P_{out}$ is the total output power of the PIRM 100 as a function of time, and all other variables are as defined in Equation 1.

If the modulator location deviation away from the optical path center, $\delta$ is 0, then the output power of the PIRM 100 is:

$$P_{out}(t) = \left|\vec{E}_{out}(t)\right|^2 = \left|E_{in}\right|^2 f^2\left(t - \frac{T}{2}\right) \qquad (3)$$

where all variables are as defined in Equations 1-2. Equation 3 shows that the total output of PIRM 100 is independent to the polarization state of the incoming optical carrier.

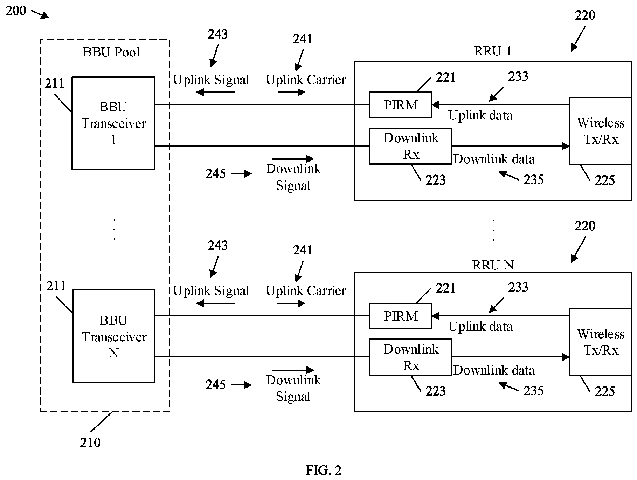

FIG. 2 is a schematic diagram of an embodiment of a cloud radio access network (CRAN) 200 configured to employ a PIRM 221, which may be similar to PIRM 100 or any other PIRM embodiment disclosed herein. CRAN 200 comprises a pool of BBUs each comprising a BBU transceiver (Tx/Rx) 211. Each BBU Tx/Rx 211 is coupled to a corresponding RRU 220, for example, via one or more optical fibers. Each RRU 220 comprises a wireless Tx/Rx 225, a PIRM 221, and a downlink receiver (Rx) 223. Each RRU 220 communicates with mobile nodes (MNs) via a wireless interface, such as an Long Term Evolution (LTE) interface, LTE advanced interface, etc., across the wireless Tx/Rx 225. Each BBU Tx/Rx 211 sends an optical downlink signal 245 to the corresponding downlink Rx 223 for transmission to the corresponding MN. The downlink signal 245 is converted to electrical downlink data 235 and transmitted to the MN via wireless Tx/Rx 225. The MN transmits corresponding uplink data 233 via wireless Tx/Rx 225. RRU 220 does not comprise an optical source (e.g., a laser, Light Emitting Diode (LED), etc.). The BBU Tx/Rx 211 transmits an optical uplink carrier 241 downstream to the RRU 220. The RRU 220 employs the PIRM 221 to modulate the uplink data 233 from the MN onto the uplink carrier 241 to create an optical uplink signal 243. The uplink signal 243 is then returned to the BBU Tx/Rx 211 via the optical fiber, for example across the same fiber as the uplink carrier 241. The uplink signal 243 can then be separated from the uplink carrier 241 at the BBU Tx/Rx 211.

A BBU pool is any grouping of BBUs, for example positioned in a wireless base station, equipment room, etc., for processing baseband signals. Each BBU may comprise one or more BBU Tx/Rxs 211, each of which is responsible for communicating with a corresponding RRU 220. The BBU Tx/Rxs 211 each comprise one or more optical sources, such as continuous wave lasers. The optical sources transmit polarized optical carriers toward the RRUs 220. The BBU Tx/Rxs 211 each comprise modulators to modulate a downlink signal 245 onto a downlink optical carrier provided by a downlink optical source. The BBU Tx/Rxs 211 also each comprise a receiver to receive the uplink signal and an optical splitter/combiner or optical circulator to separate the uplink signal 243 from the uplink carrier 241 (provided by an uplink optical source) transmitted over the optical fiber. PIRMs may also be employed on the BBUs to eliminate the polarization dependence of the optical carriers.

The BBU pool may be arranged in a star-topology as shown such that the CRAN 200 comprises a BBU pool and multiple RRUs 220. The star-topology based CRAN 200 can be extended to a CRAN 200 with tree-topology or other architectures. A tree-topology may save fiber length but may suffer from signal loss due to the introduction of power splitters in the optical link.

The RRUs 220 each comprise a wireless Tx/Rx 225, which may be any antenna or antenna array configured to wirelessly communicate with MNs via an LTE, LTE advanced, or other wireless system. RRUs 220 each further comprise a downlink Rx 223 coupled to the wireless Tx/Rx 225. The downlink Rx 223 may be any optical receiver configured to detect an optical signal received over a fiber, for example a Positive-Negative (P-N) junction, a photodiode, or similar structure. The RRUs 220 each may further comprise processor(s), memory, cache, etc. to control the wireless Tx/Rx 225 and cause the downlink data 235 from the downlink Rx 223 to be transmitted on specified wireless bands at specified times. The RRU 220 does not comprise an optical source, so the uplink carrier 241 is provided by the BBU Tx/Rx 211. The PIRM 221 modulates uplink data 233 from the wireless Tx/Rx 225 onto the uplink carrier 241 to create the uplink signal 243, which is returned to the BBU Tx/Rx 211. The fiber length between the BBU Tx/Rx 211 and the RRU 220 can range from tens of meters to tens of kilometers resulting in significant random alteration of the polarization of the uplink carrier while traversing the fiber. However, the PIRM 221 eliminates the polarization dependence and modulates the uplink carrier 241 regardless of temperature. By employing the PIRM 221, the RRU 220 can be located on a tower in an uncooled environment. Further, the RRU 220 can be produced more cheaply as no laser or similar optical source is required.

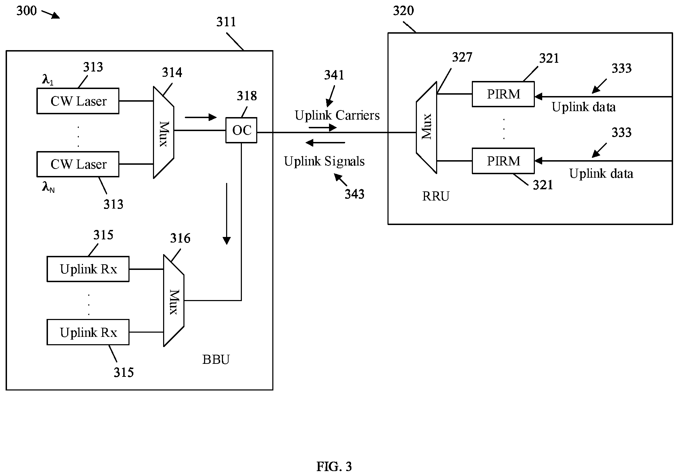

FIG. 3 is a schematic diagram of an embodiment of a CRAN 300 configured to employ wavelength division multiplexing via a plurality of PIRMs 321, which may be substantially similar to PIRM 100 or any other PIRM embodiment disclosed herein. CRAN 300 comprises a BBU 311 and an RRU 320, which may be substantially similar to a BBU Tx/Rxs 211 and an RRU 220, respectively, but are configured to communicate via wavelength division multiplexing (WDM).

The BBU 311 comprises a desired number (N) of continuous wavelength (CW) lasers 313. Each CW laser 313 is an optical source and transmits an uplink carrier 341 comprising a wavelength ($\lambda$), resulting in uplink carriers 341 of $\lambda_1$ to $\lambda_N$. BBU 311 further comprises an optical multiplexer (Mux) 314, which may be any device capable of combining a plurality of optical carriers/signals of different wavelength into a single fiber and/or capable of splitting multiple wavelengths from a single fiber into a plurality of fibers according to wavelength. Mux 314 is configured to multiplex uplink carriers 341 of $\lambda_1$ to $\lambda_N$ into a single fiber for transmission to RRU 320.

RRU 320 comprises a Mux 327 that substantially similar to Mux 314 and is configured to separate the multiplexed carriers 341 $\lambda_1$ - $\lambda_N$ to different ports based on wavelength. RRU 320 further comprises N PIRMs 321 coupled to Mux 327. Each PIRM 321 is substantially similar to PIRM 221, but is allocated to a particular wavelength. Accordingly, RRU 320 receives N uplink data 333 signals, which are substantially similar to uplink data 233 signals. Each uplink data 333 signal is modulated to a specified uplink carrier 341 $\lambda$ at a corresponding PIRM 321 resulting in uplink signals 343 $\lambda_1$ - $\lambda_N$. Uplink signals 343 are combined by the Mux 327 into a single uplink port for transmission back across the fiber to BBU 311.

The BBU 311 further comprises an optical coupler (OC) 318 coupled to Mux 314. The OC 318 may be any device capable of separating/combining the uplink carriers 341 headed in the downstream direction from/with the uplink signals 343 headed in the upstream direction across a single fiber. For example, an OC 318 may be an optical coupler, an optical circulator, or other optical splitting/combining device. The OC 318 is also coupled to a Mux 316. The OC 318 forwards the combined uplink carriers 341 from Mux 314 in toward the RRU 320 and forwards the combined uplink signals 343 from the RRU 320 toward Mux 316. Mux 316 is substantially similar to Mux 314 and is configured to split the combined uplink signals 343 into individual signals before forwarding each uplink signal 343 to a corresponding uplink Rx 315. The uplink Rxs 315 are each substantially similar to a downlink Rx 223, but are configured to receive and interpret a corresponding uplink signal 343 at a corresponding wavelength. Accordingly, N uplink Rxs 315 are employed to receive uplink signals 343 $\lambda_1$ - $\lambda_N$.

It should be noted that an optical amplifier may be placed between the OC 318 and Mux 316 or between OC 318 and the transmission fiber. Examples of optical amplifiers include, but are not limited to, semiconductor optical amplifiers (SOAs), reflective-type SOAs (RSOAs), and erbium doped finer amplifiers (EDFAs). Further, wavelength division multiplexing may be in different forms, such as coarse WDM, local area network (LAN)-WDM, or dense WDM, and may be operated at different wavelength bands, for example, the O-band, C-band, and L-band optical bands. Further, it should be noted that only the uplink channel is shown in FIG. 3 for clarity. However, a downlink channel may be configured in a similar manner to the uplink channel (e.g. N downlink lasers and a Mux in the BBU 311 and a corresponding Mux and N downlink receivers at the RRU 320). By employing CRAN 300, an RRU 320 can employ wavelength division multiplexing to communicate a plurality of uplink signals without comprising a laser or other optical source. By employing a plurality of PIRMs 321, the RRU 320 can be produced cheaply and operate in a high temperature environment while employing a single fiber for a plurality of uplink signals 343.

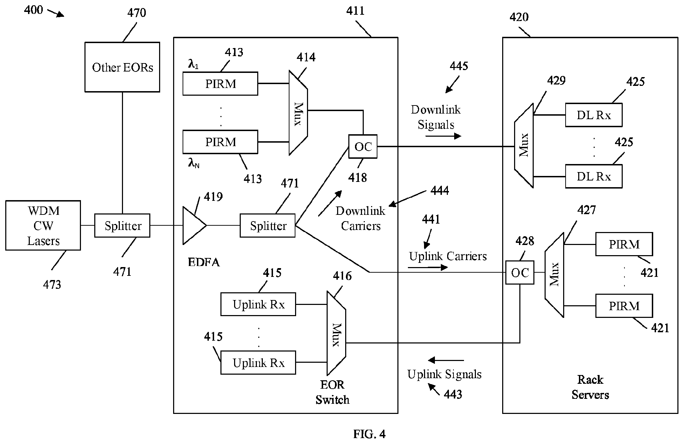

FIG. 4 is a schematic diagram of an embodiment of a datacenter network 400 configured to employ PIRMs 413 and 421, which may be substantially similar to PIRM 100 or any other PIRM embodiment disclosed herein. Datacenter network 400 comprises a plurality of rack servers 420, which are hardware devices that provide services to clients, for example by providing applications, operating software, virtualization, cloud computing, etc. Each rack of rack servers 420 may be interconnected by a Top of Rack (TOR) switch. The TOR switches/Rack servers may be organized in rows, such that each row is connected to an EOR switch 411 or 470. The EOR switches 411 or 470 are then coupled to a core network, allowing the rack servers 420 to communicate with clients via the EORs 411/470 and the core network. In an embodiment, EOR switches 411 and 470 and rack servers 420 each comprise PIRMs 413 and 421, respectively, allowing WDM CW lasers 473 to provide optical carriers for a plurality of servers, a plurality of server racks, and/or a plurality of server rows in the datacenter network 400.

The WDM Lasers 473 may be any optical light source that transmits a plurality of optical carriers at a plurality of wavelengths, and may be substantially similar to CW lasers 313. Optical carriers from the WDM Lasers 473 are forwarded to a splitter 471, which is any device configured to split an optical carrier into multiple portions, for example into multiple copies of the same group of optical carriers with reduced power/luminance. The optical carriers exit the splitter 471 and are forwarded to EOR switch 411 and other EOR switches 470, which are substantially similar to EOR switch 411, but are not shown in detail for clarity of discussion.

EOR switch 411 is any device capable of connecting other devices by performing packet switching across an optical network. The optical carriers are received at the EOR switch 411 and forwarded through an EDFA 419 to amplify the power/luminance of the optical carriers. In some embodiments, other amplifiers such as SOAs may be employed in addition to or in place of the EDFA 419. The amplified optical carriers are forwarded through an additional splitter 471 resulting in a set of uplink carriers 441 and a set of downlink carriers 444. The uplink carriers 441 are forwarded to the rack servers 420 and the downlink carriers 444 are forwarded for modulation. EOR switch 411 comprises PIRMs 413, which are similar to PIRMs 321 and are interconnected by a Mux 414, which is substantially similar to Mux 314. EOR switch 411 further comprises an OC 418, which is substantially similar to OC 318. The downlink carriers 444 pass through the OC 418 and are forwarded to Mux 414. Mux 414 splits the downlink carriers 444 into N carriers by wavelength and forwards them to the corresponding PIRMs 413 for modulation. PIRMs 413 modulate a plurality of downlink data onto the downlink carriers 444 to create downlink signals 445, which are then combined by the Mux 414 for transmission to the rack servers 420 via OC 418.

The rack servers 420 comprise a Mux 429 and downlink (DL) Rxs 425, which are substantially similar to Mux 316 and uplink Rxs 315, respectively, but configured to convey downlink signals 445. Mux 429 splits the downlink signals 445 by wavelength and forwards them to the DL Rxs 425 to be received and converted to electrical downlink data. The rack servers 420 also comprise an OC 428, a Mux 427, and PIRMs 421, which are substantially similar to OC 418, Mux 427, and PIRMs 421, respectively. The uplink carriers 441 are forwarded to Mux 427 via the OC 428. Mux 427 splits the uplink carriers 441 by wavelength and forwards them to the corresponding PIRMs 421 in a manner similar to Mux 414 and PIRMs 413. The PIRMs 421 modulate uplink data onto the uplink carriers 441 to create uplink signals 443, which are combined by the Mux 427 for transmission back upstream to the EOR switch 411. The EOR switch 411 receives the uplink signals 443 at Mux 416 and forwards them by wavelength to uplink Rxs 415, where Mux 416 and uplink Rxs 415 are substantially similar to Mux 316 and uplink Rxs 315, respectively.

It should be noted that in some embodiments, Mux 429, DL Rxs 425, OC 428, Mux 427, and PIRMs 421 are implemented in a TOR, and in some embodiments Mux 429, DL Rxs 425, OC 428, Mux 427, and PIRMs 421 are implemented in a single rack server 420 or distributed across a plurality of rack servers 420. Regardless of embodiment, by employing PIRMs 413 and 421, laser source 473 supplies enough optical carriers to allow for WDM communication between an EOR switch 411 and a plurality of rack servers 420 and also enough optical carriers for a plurality of EOR switches 470 and 411 to communicate with a plurality of corresponding rack servers 420. Such a system allows the EOR switches 411 and rack servers 420/TOR switches to be produced more cheaply by sharing lasers while still taking advantage of WDM optical communication.

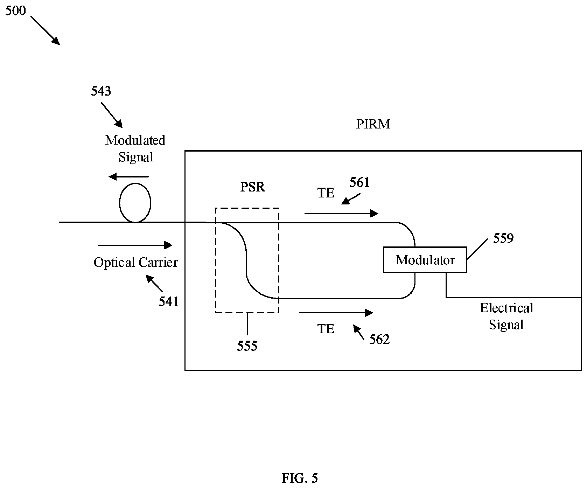

FIG. 5 is a schematic diagram of an embodiment of a silicon waveguide based PIRM 500. PIRM 500 is a specific embodiment of PIRM 100 and may be used as a PIRM in any systems disclosed herein, for example as PIRM 221, PIRM 321, PIRM 413, and/or PIRM 421. PIRM 500 is comprised of a silicon based substrate. PIRM 500 comprises a polarization splitter-rotator (PSR) 555, which serves a similar function to PBS 155 and PR 157. PSR 555 receives an optical carrier 541 from off-chip and splits the TE component 561 from the TM component such that the TE component 561 comprises a polarization that is perpendicular to the TM component. The PSR 555 then rotates the TM component into a TE polarization resulting in TE component 562 with the same/a parallel polarization to TE component 561. Modulator 559 is any silicon based modulator that is substantially similar to modulator 159, for example an MZM modulator, and IQ modulator, etc. Modulator 559 substantially simultaneously modulates TE component 561-562 with electrical data. The modulated TE component 561 exits the modulator 559 and continues along the light path in a clockwise fashion, while the modulated TE component 562 exits the modulator 559 and continues along the light path in a counter-clockwise manner. The two outputs (TE components 561-562) have orthogonal polarization, and the sum of the two output powers is independent to the polarization state of the incoming uplink carrier 541. The modulated TE components 561-562 are recombined at the PSR 555 into a single modulated optical signal 543 for transmission off-chip.

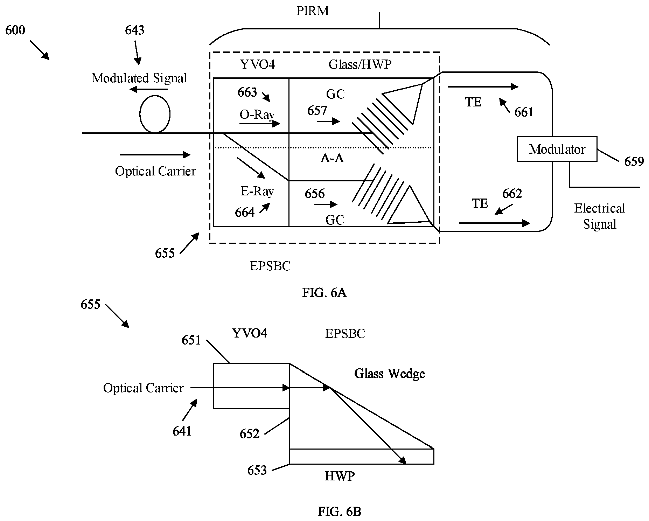

FIG. 6A is a top view of an embodiment of an external polarization beam splitter coupler (EPSBC) based PIRM 600. PIRM 600 is a specific embodiment of PIRM 100 and may be used as a PIRM in any system disclosed herein, for example as PIRM 221, PIRM 321, PIRM 413, and/or PIRM 421.

PIRM 600 employs a PBS 655 comprising a birefringence crystal 651, a glass wedge 652, and a half wave plate (HWP) 653 as shown in FIG. 6B, which shows a side view of the EPSBC. The birefringence crystal 651, which may be made of Yttrium Orthovanadate (YVO$_4$) receives an optical uplink carrier 641 from off chip. The PIRM 600 may also comprise a lens (not shown) to focus the optical carrier 641 from the fiber to the birefringence crystal 651. The birefringence crystal 651 splits the optical carrier 641 into an ordinary ray (O-ray) 663, which has a polarization perpendicular to the page, and an extraordinary ray (E-ray) 664 which has a polarization that is perpendicular/orthogonal to the O-ray 663 (e.g., parallel to the page). The glass wedge 652 bends O-ray 663 and the E-ray 664 down to grating couplers (GCs) 657 and 656, respectively as shown in FIG. 6A. The HWP 653 is positioned between the glass wedge 652 and the GCs 656-657. The lower surface of the HWP 653 is attached and bonded to the surface of the silicon chip containing the GCs 656-657. The wedge reflects the O-ray 663 and E-ray 664 and makes their polarization orientation parallel to the TE mode of the waveguide in the silicon portion of the PIRM 600. The HWP 653 further rotates the polarizations of the O-ray 663 and E-ray 664, as reflected by the glass wedge 652, by about 45 degrees and aligns them with the orientation of the corresponding GCs 656-657, resulting in TE component 661 and TE component 662, respectively. As such, the PBS 655 provides substantially the same functionality as PBS 155 and PR 157. The GCs 656-657 are any photoresist gratings configured to couple light into a waveguide. Upon entering the GCs 656-657, TE components 661-662 enter light paths through the silicon waveguide. PIRM 600 further comprises a modulator 659, which is substantially similar to modulators 159 and 559. The TE components 661-662 enter the modulator 659 from a clockwise and a counter-clockwise direction, respectively, and are substantially simultaneously modulated, with an electrical signal being substantially simultaneously modulated onto the TE components 661-662. Modulated TE components 661-662 then return to the GCs 656-657, respectively, and are combined into an output signal 643 by the PBS 655 for transmission off chip (e.g. across a fiber).

FIG. 6B is a cross sectional view of the embodiment of the EPSBC based PIRM 600 taken across line A-A in FIG. 6A. As can be seen in FIG 6A, the birefringence crystal splits the O-ray 663 and E-ray 664 in the horizontal plane. As shown in FIG. 6B, the glass wedge 652 refracts the O-ray 663 and E-ray 664 in the vertical plane and through the HWP 653 for entry in the GCs 656-657.

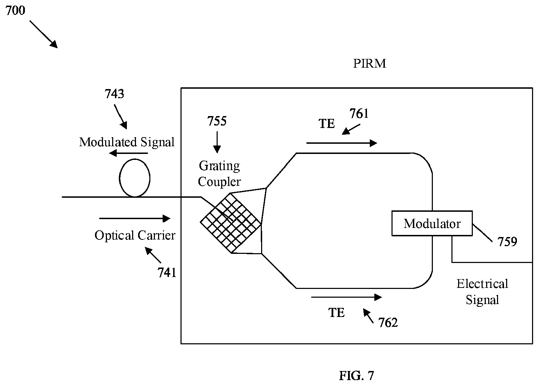

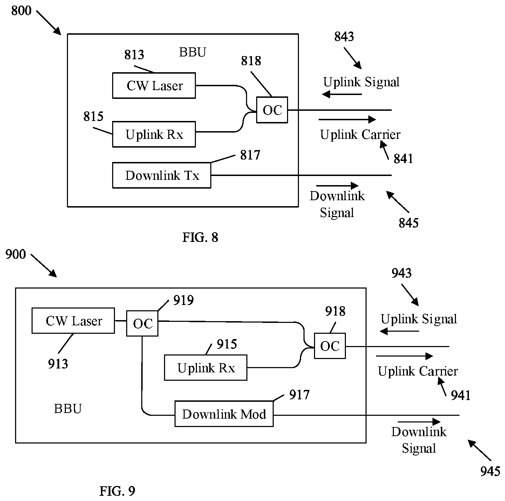

FIG. 7 is a schematic diagram of an embodiment of a grating coupler based PIRM 700. PIRM 700 is a specific embodiment of PIRM 100 and may be used as a PIRM in any system disclosed herein, for example as PIRM 221, PIRM 321, PIRM 413, and/or PIRM 421. PIRM 700 receives an optical carrier 741 from off chip. PIRM 700 comprises a two-dimension grating coupler 755 (2D-GC) with a specified incidence angle for the waveguide. The 2D-GC 755 has two gratings with corresponding orientations orthogonal to each other. Accordingly, the optical carrier 741 is split across the grating coupler 755 such that a first optical component is transmitted into the lower waveguide to become the TE component 762 while a second optical component with an orthogonal orientation is transmitted into the upper waveguide to become another TE component 761. As such, the grating coupler 755 performed substantially the same function as a PBS 155 and PR 157. PIRM 700 comprises a modulator 759, which is substantially similar to modulator 159, and is configured to substantially simultaneously modulate TE components 761-762. Modulated TE component 761 returns to the grating coupler 755 in a clockwise direction while modulated TE component 762 returns to the grating coupler 755 in a counter-clockwise direction. Modulated TE components 761-762 are then combined by the grating coupler 755 into a single output signal 743 for transmission off chip (e.g. across a fiber). FIG. 8 is a schematic diagram of an embodiment of a baseband unit (BBU) 800 for use in a CRAN, such as CRAN 200, employing PIRMs, such as PIRMs 100, 221, 500, 600, and/or 700. For example, BBU 800 may implement one or more BBU transceivers 211. BBU 800 comprises a CW laser 813, and uplink Rx 815, and an OC 818, which are substantially similar to the CW laser 313, the uplink Rx 315, the OC 318, but are not configured for WDM. Specifically, the CW laser 813 generates a single uplink carrier 841 for downstream transmission to the RRU (e.g. RRU 220) via the OC 818, and a modulated uplink signal 843 is received back from the RRU via the same fiber. The OC 818 forwards the uplink signal 843 from the RRU into the uplink Rx 815 for conversion into electrical data. The BBU 800 further comprises a downlink Tx 817, which is a CW laser with a modulator, such as a modulator 159. The downlink Tx 817 creates and modulates an optical carrier, resulting in a downlink signal 845 for transmission to the RRU. Accordingly, BBU 800 employs two optical fibers, one for the uplink signal 843 and uplink carrier 841 and one for the downlink signal 845. Further, both lasers (e.g. laser 813 and downlink Tx 817) are positioned in the BBU 800 allowing the RRU to be produced without an on device laser/optical source, while still employing optical communication. FIG. 9 is a schematic diagram of another embodiment of a BBU 900 for use in a CRAN, such as CRAN 200, employing PIRMs such as PIRMs 100, 221, 500, 600, and/or 700. For example, BBU 900 may implement one or more BBU transceivers 211. BBU 900 may be substantially similar to BBU 800 but may employ a single CW laser 913 for both upstream and downstream communications. BBU 900 comprises CW laser 913, uplink Rx 915, and OCs 918-919, which are substantially similar to CW laser 813, uplink Rx 815, and OC 818, respectively, but coupled in a different configuration. BBU 900 further comprises downlink modulator 917, which is substantially similar to downlink Tx 817, but does not comprise a laser/optical source. CW laser 913 transmits an optical carrier, which is split by OC 919 and forwarded to OC 918 as an uplink carrier 941 and forwarded to downlink modulator 917 as a downlink carrier. Downlink modulator 917 modulates the downlink carrier to create a downlink signal 945 for transmission to an RRU via a fiber. Uplink carrier 941 is forwarded downstream to an RRU, which modulates the uplink carrier 941 into an uplink signal 943 as discussed above. The uplink signal 943 is received by OC 918 and forwarded to uplink Rx 915 for conversion into electrical data. One or more optical amplifiers may be placed along the light paths as needed to boost the optical signal, for example between OC 918 and uplink Rx 915 and/or between OC 918 and the transmission fiber. Accordingly, BBU 900 employs two optical fibers, one for the uplink signal 943 and uplink carrier 941 and one for the downlink signal 945, but employs a single laser 913 per RRU. Further, the laser 913 is positioned in the BBU 900 allowing the RRU to be produced without an on-device laser/optical source, while still employing optical communication.

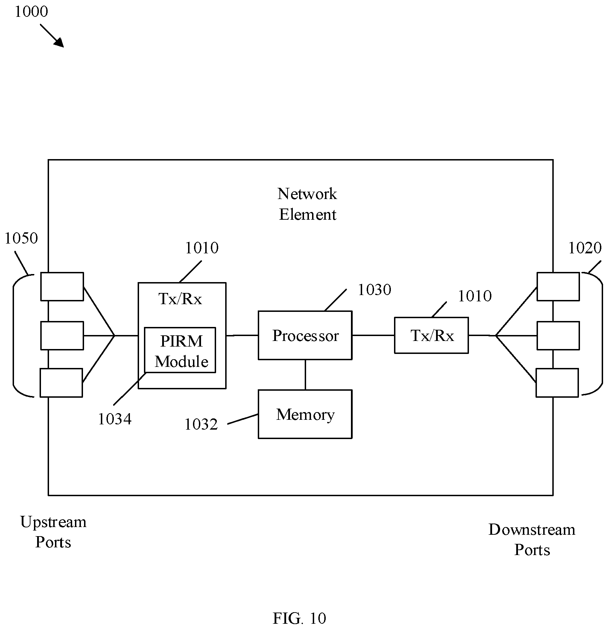

FIG. 10 is a schematic diagram of an embodiment of an NE 1000 configured to operate in a network, such as networks 200, 300, and/or 400, employing PIRMs, such as PIRMs 100, 500, 600, and/or 700. For example, the NE 1000 may be located in an optical transmission system, such as a CRAN or a datacenter network, and may comprise a Tx comprising a PIRM module 1034 (comprising a PIRM but not comprising a corresponding laser). The NE 1000 may be configured to implement or support any of the schemes described herein. In some embodiments NE 1000 may act as an RRU, BBU, EOR switch, TOR switch, rack server, or any other optical network element disclosed herein. One skilled in the art will recognize that the term transceiver unit encompasses a broad range of devices of which NE 1000 is merely an example. NE 1000 is included for purposes of clarity of discussion, but is in no way meant to limit the application of the present disclosure to a particular transceiver unit embodiment or class of transceiver unit embodiments. At least some of the features/methods described in the disclosure may be implemented in a network apparatus or component such as a NE 1000. For instance, the features/methods in the disclosure may be implemented using hardware, firmware, and/or software installed to run on hardware. The NE 1000 may be any device that transports electrical, wireless, and/or optical signals through a network, e.g., a switch, router, bridge, server, a client, etc. As shown in FIG. 10, the NE 1000 may comprise transceivers (Tx/Rx) 1010, which may be transmitters, receivers, or combinations thereof, comprising a PIRM. A Tx/Rx 1010 may be coupled to a plurality of upstream ports 1050 for transmitting and/or receiving optical frames from other nodes and a Tx/Rx 1010 coupled to a plurality of downstream ports 1020 for transmitting and/or receiving frames from other nodes, respectively. In some embodiments, the Tx/Rx 1010 is an antenna for use in downstream transmissions and downstream ports 1020 are omitted. A processor 1030 may be coupled to the Tx/Rxs 1010 to process the data signals and/or determine which nodes to send data signals to. The processor 1030 may comprise one or more multi-core processors and/or memory devices 1032, which may function as data stores, buffers, etc. Processor 1030 may be implemented as a general processor or may be part of one or more application specific integrated circuits (ASICs) and/or digital signal processors (DSPs). The NE 1000 may comprise a PIRM module 1034, which may be configured to modulate a received optical carrier to generate an optical signal for re-transmission as discussed herein. The downstream ports 1020 and/or upstream ports 1050 may contain electrical, wireless, and/or optical transmitting and/or receiving components.

In an example embodiment, the NE 1000 includes a reception module receiving an optical carrier from a remote device via an optical input port, a splitter module splitting the optical carrier into a first polarized component and a second polarized component such that a first polarization of the first polarized component is perpendicular to a second polarization of the second polarized component, a modulation module modulating an electrical signal onto the first polarized component and the second polarized component, and a combiner module combining the modulated first polarized component and the modulated second polarized component to create a combined modulated signal. In some embodiments, the NE 1000 may include other or additional modules for performing any one of or combination of steps described in the embodiments.

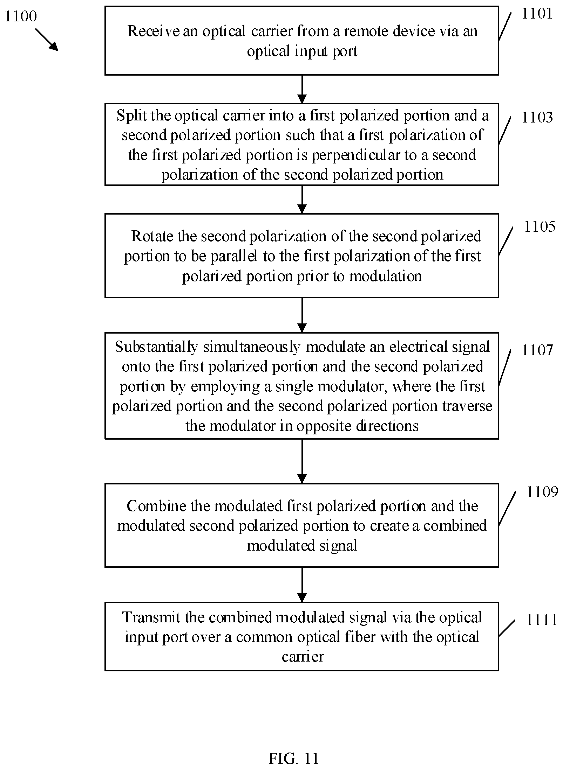

FIG. 11 is a flowchart of an embodiment of a method 1100 of PIRM based modulation, for example in a network such as networks 200, 300, and/or 400, employing PIRMs, such as PIRMs 100, 500, 600, and/or 700. Method 1100 is initiated when an optical carrier is received from a remote device. At step 1101, an optical carrier is received from a remote device via an optical input port. At step 1103, the optical carrier is split (by a polarization beam splitter/combiner) into a first polarized portion and a second polarized portion such that a first polarization of the first polarized portion is perpendicular (e.g. orthogonal) to a second polarization of the second polarized portion. By performing step 1103, the two polarizations of the optical carrier are separated and can be managed separately. At step 1105, the second polarization of the second polarized portion is rotated (e.g. by a polarization rotator) to be parallel to the first polarization of the first polarized portion prior to modulation. At step 1107, an electrical signal is substantially simultaneously modulated onto the first polarized portion and the second polarized portion by employing a single modulator. As discussed above, the first polarized portion and the second polarized portion traverse the modulator in opposite directions (e.g. clockwise and counter-clockwise). At step 1109, the modulated first polarized portion and the modulated second polarized portion are returned to the polarization beam splitter/combiner and combined to create a combined modulated signal. At step 1111, the combined modulated signal is transmitted via the optical input port over a common optical fiber with the optical carrier.

FIG. 12 is a graph 1200 of power penalty versus modulator location deviation tolerance for an embodiment of a PIRM, such as PIRMs 100, 221, 321, 413, 421, 500, 600, 700, and 1034. Graph 1200 shows the power penalty to achieve a bit error rate (BER) of $2e^{-4}$ as a function of modulator location tolerance for various polarization rotation angles $\theta$ relative to the TE polarization of a PBS. The worst performance is exhibited at $\theta = 45$ degrees. BER in graph 1200 is determined based on a Non-return-to-zero (NRZ) with a baud rate of 28 Gigabauds (Gbauds) per second (GBauds/s) and a transmitter and receiver bandwidth of about 0.75 times the baud rate. For modulator location tolerances less than 2 picosecond (ps), the penalty is very small for all the $\theta$ evaluated. For location tolerances of less the 1 ps, the power penalty to achieve the BER is negligible regardless of $\theta$. Accordingly, so long as a PIRM is at a location within 1-2 ps of the light path center, the power penalty to achieve the desired BER is acceptable.

While several embodiments have been provided in the present disclosure, it should be understood that the disclosed systems and methods might be embodied in many other specific forms without departing from the scope of the attached claims. The present examples are to be considered as illustrative and not restrictive, and the intention is not to be limited to the details given herein. For example, the various elements or components may be combined or integrated in another system or certain features may be omitted, or not implemented.

In addition, techniques, systems, subsystems, and methods described and illustrated in the various embodiments as discrete or separate may be combined or integrated with other systems, modules, techniques, or methods without departing from the scope of the attached claims. Other items shown or discussed as coupled or directly coupled or communicating with each other may be indirectly coupled or communicating through some interface, device, or intermediate component whether electrically, mechanically, or otherwise. Other examples of changes, substitutions, and alterations are ascertainable by one skilled in the art and could be made without departing from the scope as defined in the attached claims.

**Claims**

1. An apparatus comprising:

an optical input (147) configured to receive an optical carrier (641);
a polarization beam splitter (655) optically coupled to the optical input (147), a first light path (156), and a second light path (158), wherein the polarization beam splitter (655) is configured to:

forward a first polarized component of the optical carrier (641) along the first light path (156); and
forward a second polarized component of the optical carrier (641) along the second light path (158), wherein the first polarized component comprises a first polarization that is perpendicular to a second polarization of the second polarized component upon exiting the polarization beam splitter (655); and

an optical modulator (659) with a proximate end coupled to the first light path (156) and a distal end coupled to the second light path (158), wherein the optical modulator (659) is configured to simultaneously modulate the first polarized component of the optical carrier (641) and the second polarized component of the optical carrier (641) by a common electrical signal, comprising:

receiving the first polarized component from the first light path (156) via the proximate end;
receiving the second polarized component from the second light path (158) via the distal end;
modulating the first polarized component to generate a first modulated component;
modulating the second polarized component to generate a second modulated component;
outputting the first modulated component to the second light path (158) via the distal end; and
outputting the second modulated component to the first light path (156) via the proximate end;

wherein the polarization beam splitter (655) is further configured to:

combine the first modulated component and the second modulated component into a combined modulated signal (643); and
forward the combined modulated signal via the optical input in an opposite direction to a direction of the optical carrier (141);

**characterized in that**
the first light path (156) and the second light path (158) comprise a silicon waveguide;
the polarization beam splitter (655) comprises a Yttrium Orthovanadate, YVO4, birefringence crystal (651), a glass wedge (652), a half wave plate (653), "HWP", and grating couplers (657, 656), "GCs";
the birefringence crystal (651) is configured to split the optical carrier (641) into an ordinary ray (663), O-ray, which has a polarization perpendicular to a page, and an extraordinary ray (664), E-ray, which has a polarization that is perpendicular/orthogonal to the O-ray (663);
the glass wedge (652) is configured to bend the O-ray (663) and the E-ray (664) to the GCs (657, 656); and
the HWP (653) is positioned between the glass wedge (652) and the GCs (657, 656), attached and bonded to the surface of a silicon chip containing the GCs (657, 656), and configured to rotate the polarizations of the O-ray (663) and E-ray (664), as reflected by the glass wedge (652), by 45 degrees and to align them with the orientation of the corresponding GCs (657, 656), resulting **in that** the polarizations of said two rays are respectively aligned with the TE modes of the silicon waveguides (661, 662) of the first and the second light paths; and
the GCs (657, 656) are photoresist gratings configured to couple light into the silicon waveguide.

2. The apparatus of claims 1, wherein the optical modulator (159) comprises a silicon waveguide based modulator.

3. The apparatus of claim 2, wherein the silicon waveguide based modulator is a Mach-Zehnder modulator, or an Inphase Quadrature modulator.

**Patentansprüche**

1. Vorrichtung, umfassend:

   einen optischen Eingang (147), ausgelegt zum Empfangen eines optischen Trägers (641);
   einen Polarisationsstrahlteiler (655), der optisch mit dem optischen Eingang (147), einem ersten Lichtweg (156) und einem zweiten Lichtweg (158) gekoppelt ist, wobei der Polarisationsstrahlteiler (655) ausgelegt ist zum:

   Weiterleiten einer ersten polarisierten Komponente des optischen Trägers (641) entlang des ersten Lichtwegs (156); und
   Weiterleiten einer zweiten polarisierten Komponente des optischen Trägers (641) entlang des zweiten Lichtwegs (158), wobei die erste polarisierte Komponente eine erste Polarisation umfasst, die beim Verlassen des Polarisationsstrahlteilers (655) senkrecht zu einer zweiten Polarisation der zweiten polarisierten Komponente steht; und
   einen optischen Modulator (659) mit einem Proximalende, gekoppelt an den ersten Lichtweg (156), und einem Distalende, gekoppelt mit dem zweiten Lichtweg (158), wobei der optische Modulator (659) ausgelegt ist zum simultanen Modulieren der ersten polarisierten Komponente des optischen Trägers (641) und der zweiten polarisierten Komponente des optischen Trägers (641) durch ein gemeinsames elektrisches Signal, umfassend:

   Empfangen der ersten polarisierten Komponente von dem ersten Lichtweg (156) über das Proximalende;
   Empfangen der zweiten polarisierten Komponente von dem zweiten Lichtweg (158) über das Distalende;
   Modulieren der ersten polarisierten Komponente, um eine erste modulierte Komponente zu erzeugen;
   Modulieren der zweiten polarisierten Komponente, um eine zweite modulierte Komponente zu erzeugen;
   Ausgeben der ersten modulierten Komponente in den zweiten Lichtweg (158) über das Distalende; und
   Ausgeben der zweiten modulierten Komponente in den ersten Lichtweg (156) über das Proximalende;
   wobei der Polarisationsstrahlteiler (655) ferner ausgelegt ist zum:

   Kombinieren der ersten modulierten Komponente und der zweiten modulierten Komponente in ein kombiniertes moduliertes Signal (643); und
   Weiterleiten des kombinierten modulierten Signals über den optischen Eingang in einer Gegenrichtung zu einer Richtung des optischen Trägers (141);
   **dadurch gekennzeichnet, dass**
   der erste Lichtweg (156) und der zweite Lichtweg (158) einen Silicium-Wellenleiter umfassen;
   der Polarisationsstrahlteiler (655) einen doppelbrechenden Yttriumorthovanadat-Kristall bzw. YV04-Kristall (651), einen Glaskeil (652), eine Halbwellenplatte "HWP" (653) und Gitterkoppler "GCs" (657, 656) umfasst;
   wobei der doppelbrechende Kristall (651) ausgelegt ist zum Aufteilen des optischen Trägers (641) in einen ordinären Strahl (663), O-Strahl, welcher eine Polarisation senkrecht zu einer Seite aufweist, und einen außerordentlichen Strahl (664), E-Strahl, welcher eine Polarisation aufweist, die senkrecht/orthogonal zu dem O-Strahl (663) ist;
   wobei der Glaskeil (652) ausgelegt ist zum Ablenken des O-Strahls (663) und des E-Strahls (664) zu den GCs (657, 656); und
   die HWP (653) zwischen dem Glaskeil (652) und den GCs (657, 656) positioniert ist, angebracht an und gebondet mit der Oberfläche eines Silicium-Chips, der die GCs (657, 656) enthält, und ausgelegt ist zum Drehen der Polarisationen des O-Strahls (663) und des E-Strahls (664), wenn durch den Glaskeil (652) reflektiert, um 45 Grad und zum Ausrichten dieser mit der Orientierung der entsprechenden GCs (657, 656), was dazu führt, dass die Polarisationen der zwei Strahlen jeweils mit den TE-Moden der Silicium-Wellenleiter (661, 662) des ersten und des zweiten Lichtwegs ausgerichtet sind; und
   die GCs (657, 656) Fotolackgitter sind, die ausgelegt sind zum Einkoppeln von Licht in den Silicium-Wellenleiter.

2. Vorrichtung nach Anspruch 1, wobei der optische Modulator (159) einen auf einem Silicium-Wellenleiter basierenden Modulator umfasst.

3. Vorrichtung nach Anspruch 2, wobei der auf einem Silicium-Wellenleiter basierende Modulator ein Mach-Zehnder- oder Phasenlage-Quadratur-Modulator ist.

**Revendications**

1. Appareil comprenant :

une entrée optique (147) configurée pour recevoir une porteuse optique (641) ;
un diviseur de faisceau de polarisation (655) couplé optiquement à l'entrée optique (147), un premier trajet lumineux (156) et un second trajet lumineux (158), dans lequel le diviseur de faisceau de polarisation (655) est configuré pour :

transmettre un premier composant polarisé de la porteuse optique (641) le long du premier trajet lumineux (156) ; et
transmettre un second composant polarisé de la porteuse optique (641) le long du second trajet lumineux (158), dans lequel le premier composant polarisé comprend une première polarisation qui est perpendiculaire à une seconde polarisation du second composant polarisé lors de la sortie du diviseur de faisceau de polarisation (655) ; et

un modulateur optique (659) ayant une extrémité proximale couplée au premier trajet lumineux (156) et une extrémité distale couplée au second trajet lumineux (158), dans lequel le modulateur optique (659) est configuré pour moduler simultanément le premier composant polarisé de la porteuse optique (641) et le second composant polarisé de la porteuse optique (641) par un signal électrique commun, comprenant :

la réception du premier composant polarisé à partir du premier trajet lumineux (156) par le biais de l'extrémité proximale ;
la réception du second composant polarisé à partir du second trajet lumineux (158) par le biais de l'extrémité distale ;
la modulation du premier composant polarisé pour générer un premier composant modulé ;
la modulation du second composant polarisé pour générer un second composant modulé ;
la sortie du premier composant modulé vers le second trajet lumineux (158) par le biais de l'extrémité distale ; et
la sortie du second composant modulé vers le premier trajet lumineux (156) par le biais de l'extrémité proximale ;

dans lequel le diviseur de faisceau de polarisation (655) est configuré en outre pour :

combiner le premier composant modulé et le second composant modulé dans un signal modulé combiné (643) ; et
transmettre le signal modulé combiné par le biais de l'entrée optique dans une direction opposée à une direction de la porteuse optique (141) ;
**caractérisé en ce que**
le premier trajet lumineux (156) et le second trajet lumineux (158) comprennent un guide d'ondes en silicium ;
le diviseur de faisceau de polarisation (655) comprend un cristal à biréfringence (651) d'orthovanadate d'yttrium, YV04, un coin de verre (652), une lame demi-onde (653), « HWP » et des coupleurs de réseau de diffraction (657, 656), « GC » ;
le cristal à biréfringence (651) est configuré pour diviser la porteuse optique (641) en un rayon ordinaire (663), O-rayon, qui présente une polarisation perpendiculaire à une page, et en un rayon extraordinaire (664), E-rayon, qui présente une polarisation qui est perpendiculaire/orthogonale à l'O-rayon (663) ;
le coin de verre (652) est configuré pour courber l'O-rayon (663) et l'E-rayon (664) vers les GC (657, 656) ; et
la HWP (653) est positionnée entre le coin de verre (652) et les GC (657, 656), fixée et liée à la surface d'une puce en silicium contenant les GC (657, 656) et configurée pour faire tourner les polarisations de l'O-rayon (663) et de l'E-rayon (664), comme réfléchi par le coin de verre (652), de 45 degrés et pour les aligner avec l'orientation des GC (657, 656) correspondants, entraînant que les polarisations desdits deux rayons sont alignées respectivement avec les modes TE des guides d'ondes en silicium (661, 662) des premier et second trajets lumineux ; et

les GC (657, 656) sont des réseaux de résine photosensible configurés pour coupler la lumière dans le guide d'ondes en silicium.

2. Appareil selon la revendication 1, dans lequel le modulateur optique (159) comprend un modulateur basé sur un guide d'ondes en silicium.

3. Appareil selon la revendication 2, dans lequel le modulateur basé sur le guide d'ondes en silicium est un modulateur de Mach-Zehnder ou un modulateur en quadrature de phase.

100

PIRM

Reflector     TE     158     Reflector

152 →     153

143     PR

157     Modulator     159

Optical Signal     TM     TE     Electrical
Signal

151

147     PBS     Reflector

Optical Carrier     155     156

141

FIG. 1

200

BBU Pool

243 241

211 Uplink Signal Uplink Carrier

BBU
Transceiver
1

245 → Downlink
Signal

220

RRU 1

221 233

PIRM

Uplink data

Downlink
Rx

Downlink data

223 235

Wireless
Tx/Rx

225

243 241

211 Uplink Signal Uplink Carrier

BBU
Transceiver
N

245 → Downlink
Signal

220

RRU N

221 233

PIRM

Uplink data

Downlink
Rx

Downlink data

223 235

Wireless
Tx/Rx

225

210

FIG. 2

**FIG. 3**

FIG. 4

500

543

Modulated
Signal

Optical Carrier

541

PIRM

PSR

561

TE

Modulator

559

555

TE

562

Electrical
Signal

FIG. 5

600

643

Modulated Signal

Optical Carrier

PIRM

YVO4          Glass/HWP

663          GC
O-Ray    657

A-A

E-Ray    656
664          GC

TE    661

Modulator    659

TE    662

Electrical
Signal

655

EPSBC

**FIG. 6A**

655

651          YVO4          EPSBC

Optical Carrier          **Glass Wedge**

641          652

653

**HWP**

**FIG. 6B**

700

PIRM

743

755

TE    761

Modulated Signal

Grating
Coupler

Modulator

759

Optical Carrier

741

Electrical
Signal

TE    762

FIG. 7

800

BBU

813

CW Laser

818

OC

815

Uplink Rx

817

Downlink Tx

843

Uplink Signal

Uplink Carrier

841

Downlink
Signal

845

**FIG. 8**

900

CW Laser

919

OC

918

OC

915

Uplink Rx

913

BBU

917

Downlink Mod

943

Uplink Signal

Uplink Carrier

941

Downlink
Signal

945

**FIG. 9**

1000

Network
Element

1050

1010

1020

Tx/Rx

1030

1010

PIRM
Module

Processor

Tx/Rx

1034

1032

Memory

Upstream
Ports

Downstream
Ports

FIG. 10

1100

1101
Receive an optical carrier from a remote device via an optical input port

1103
Split the optical carrier into a first polarized portion and a second polarized portion such that a first polarization of the first polarized portion is perpendicular to a second polarization of the second polarized portion

1105
Rotate the second polarization of the second polarized portion to be parallel to the first polarization of the first polarized portion prior to modulation

1107
Substantially simultaneously modulate an electrical signal onto the first polarized portion and the second polarized portion by employing a single modulator, where the first polarized portion and the second polarized portion traverse the modulator in opposite directions

1109
Combine the modulated first polarized portion and the modulated second polarized portion to create a combined modulated signal

1111
Transmit the combined modulated signal via the optical input port over a common optical fiber with the optical carrier

FIG. 11

1200

Power Penalty at
BER of about 2e⁻⁴
(dB)

FIG. 12

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9425883 A1

- WO 0135539 A2

**Non-patent literature cited in the description**

- **X. S. YAO.** Polarization insensitive antenna remoting link with frequency conversion gain. *IEEE Photon. Technol. Lett.,* 2000, vol. 12, 1382-1384
- **R.D. ESMAN ; M.J. MARRONE.** Polarization-independent Fiber-optic Microwave Modulator. *LEOS,* 1993

- **B. CHARBONNIER ; SYLVIE MENEZO ; P. O'BRIEN ; AURELIEN LEBRETON ; J. M. FEDELI ; B. BEN BAKIR.** Silicon Photonics for Next Generation FDM/FDMA PON. *J. Opt. Commun. Netw.,* 2012, vol. 4, A29-A37